# EUROPEAN PATENT SPECIFICATION

(11) **EP 3 859 467 B1**
(45) Date of publication and mention of the grant of the patent: **15.05.2024**
(21) Application number: 18945298.0
(22) Date of filing: 27.12.2018
(51) Int. Cl.: G06Q 10/0631, A01D 34/00

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF ET PROCÉDÉ DE TRAITEMENT D'INFORMATIONS

(43) Date of publication of application: 04.08.2021
(73) Proprietor: HONDA MOTOR CO., LTD., Minato-ku Tokyo 107-8556 (JP)
(72) Inventor: NAKAJIMA, Yusuke, Tokyo 107-8556 (JP); DOBASHI, Manabu, Wako-shi, Saitama 351-0193 (JP); KONO, Kaori, Tokyo 107-8556 (JP)
(74) Representative: Beder, Jens
(86) International application number: PCT/JP2018/048167
(87) International publication number: WO 2020/136811

(56) References cited:
- EP-A2- 2 390 741
- WO-A1-2017/061516
- WO-A1-2017/130446
- JP-A- 2009 087 138
- JP-A- 2017 010 161
- JP-A- 2018 109 849
- JP-A- 2018 147 034
- US-A1- 2013 166 344
- US-A1- 2017 349 058

## Description

### TECHNICAL FIELD

The present invention relates to an information processing apparatus and an information processing method.

### BACKGROUND ART

In the landscaping industry and the like, there are cases where a plurality of workers perform work such as lawn mowing on a team. When a plurality of workers perform work using a plurality of types of work machines, the workers need to corporate in terms of areas to which they are assigned for performing work, the order in which they perform work, and the like. Japanese patent laid-open documents No. 2016-31649 and No. 2018-108034 propose a coordination control system for performing work by sharing the work among a plurality of work vehicles.

US 2017/0349058 A1 discloses a fleet management system that includes a connected lawn mower including a prime mover, a mower blade, and a processing circuit including a processor and memory. The processing circuit receives a cost input indicating an amount of money to complete a job, receives an on-site time for the job, and receives operational data from the connected lawn mower, including a prime mover runtime. The processing circuit calculates an efficiency value for the connected lawn mower based on the prime mover runtime and the on-site time. The processing circuit calculates a profitability value for the job based on at least the cost input and the on-site time, generates an efficiency report and profitability report for the connected unit based on the calculated efficiency and profitability values, and transmits the efficiency report and the profitability report to a computing system.

### SUMMARY OF INVENTION

### TECHNICAL PROBLEM

In the above-mentioned Patent Documents, it is aimed to efficiently perform work using work vehicles that have been allocated for the work. However, there are cases where it is difficult to efficiently perform work, depending on the number and/or ratio of allocated work machines. The purpose of some aspects of the present invention is to provide a technique for appropriately determining the number and/or ratio of a plurality of types of work machines.

### SOLUTION TO PROBLEM

In view of the above issue, independent claim 1 defines a an information processing apparatus and the corresponding independent method claim defining an information processing method that provide a solution to the technical problem. The dependent claims define further advantageous embodiments.

### ADVANTAGEOUS EFFECTS OF INVENTION

It is possible to appropriately determine the number and/or ratio of a plurality of types of work machines using the above-described means.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a block diagram illustrating a configuration example of an information processing apparatus according to some embodiments of the present invention.
FIG. 2A is a diagram illustrating an example of work machine information stored in an information processing apparatus according to some embodiments of the present invention.
FIG. 2B is a diagram illustrating an example of work area information stored in an information processing apparatus according to some embodiments of the present invention.
FIG. 2C is a diagram illustrating an example of work history information stored in an information processing apparatus according to some embodiments of the present invention. FIG. 3 is a flowchart illustrating an operation example of an information processing apparatus according to some embodiments of the present invention.
FIG. 4 is a flowchart illustrating an operation example of an information processing apparatus according to some embodiments of the present invention.

### DESCRIPTION OF EMBODIMENTS

Embodiments of the present invention will be described below with reference to the accompanying drawings. Some embodiments of the present invention relate to an information processing apparatus that can be used by a vendor that performs work using a plurality of types of work machines. In the following examples, landscaping work that is performed in a work area using two or more types out of a ride-on lawn mower, a walk-behind lawn mower, and a blower is handled as an example of work. The ride-on lawn mower is a work machine for a worker to ride on and perform lawn mowing. The ride-on lawn mower is an example of a work vehicle. The walk-behind lawn mower is a work machine for a worker to perform lawn mowing while walking. The blower is a work machine for a worker to perform blowing of lawn grass while walking. Some types out of these work machines do not need to be used for landscaping work. Also, another type of work machine such as a robot lawn mower may also be used for landscaping work. Here, landscaping work is handled as an example of work, but there is no limitation to landscaping work, and the present invention may also be applied to agricultural work, snow-plowing work, and the like, and, in this case, examples of a work machine include a cultivator and a snowplow, and there is no limitation to a lawn mower.

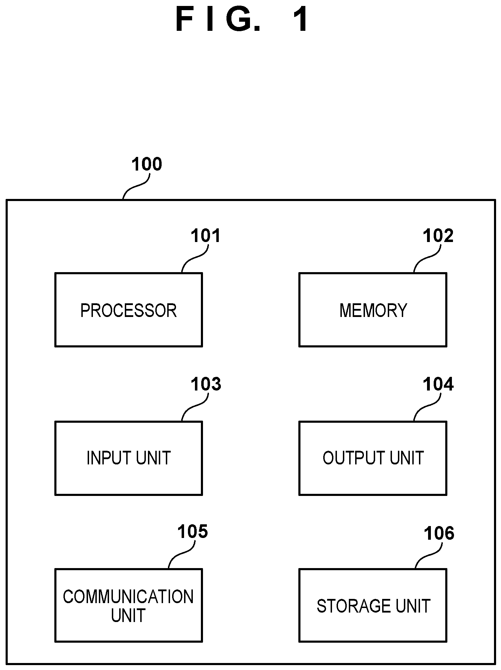

A configuration example of an information processing apparatus 100 according to some embodiments of the present invention will be described with reference to FIG. 1. The information processing apparatus 100 includes a processor 101, a memory 102, an input unit 103, an output unit 104, a communication unit 105, and a storage unit 106. The processor 101 performs overall processing of the information processing apparatus 100. The processing content will be described later in detail. The processor 101 may be a single processor, or may also be a plurality of separate processors. The processor 101 functions as a CPU or a GPU, for example. The memory 102 stores programs and data used for processing performed by the information processing apparatus 100. The memory 102 is constituted by a ROM, a RAM, and the like.

The input unit 103 is an apparatus for receiving input from the user of the information processing apparatus 100 (for example, a worker of a landscaping team), and is constituted by push buttons, a touch pad, a keyboard, and the like. The output unit 104 is an apparatus for outputting information to the user of the information processing apparatus 100, and is constituted by a display, a speaker, and the like. The input unit 103 and the output unit 104 may also be constituted by a touch screen.

The communication unit 105 is an apparatus for the information processing apparatus 100 to communicate with another apparatus. If the communication unit 105 performs wired communication, the communication unit 105 is constituted by a communication port, a network card, and the like. If the communication unit 105 performs wireless communication, the communication unit 105 is constituted by an antenna, a baseband processing circuit, and the like. The storage unit 106 stores information used for processing of the information processing apparatus 100. The storage unit 106 is constituted by an HDD, SDD, and the like.

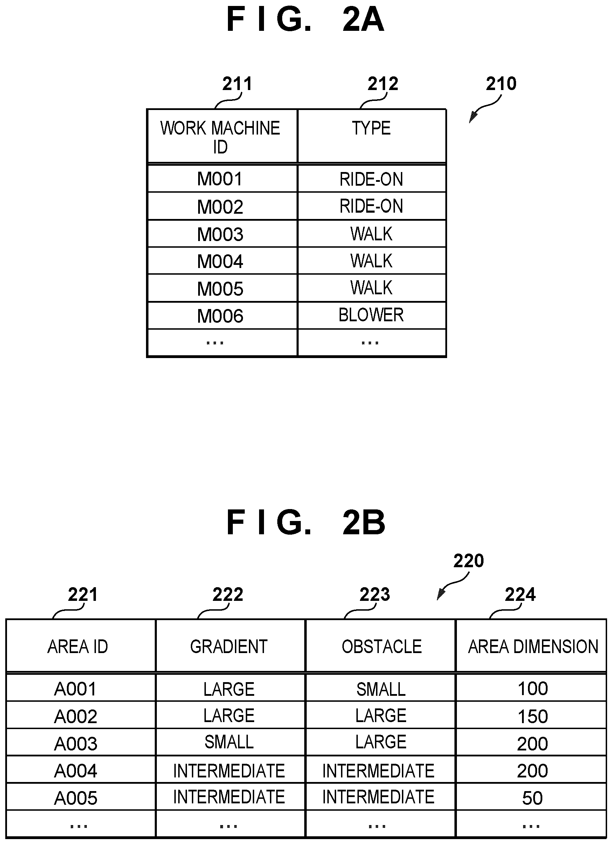

Examples of information stored by the information processing apparatus 100 will be described with reference to FIGS. 2A to 2C. The storage unit 106 of the information processing apparatus 100 stores work machine information 210, work area information 220, and work history information 230. In FIGS. 2A to 2C, the information has a table format. However, the storage unit 106 may store such information in another format.

The work machine information 210 is information regarding work machines owned by one landscaping vendor. A column 211 represents an identifier uniquely allocated for each work machine. A column 212 represents a type of work machine. In the column 212, "ride-on" indicates that the work machine is a ride-on lawn mower, "walk-behind" indicates the work machine is a walk-behind lawn mower, and "blower" indicates that the work machine is a blower. The work machine information 210 may include other information such as the use period and the model of each work machine. The user of the information processing apparatus 100 (for example, the landscaping vendor) registers information regarding work machines that can be used for work, in the work machine information 210.

The work area information 220 is information regarding work areas in which one landscaping vendor performs work. Each of these work areas may be an area actually subjected to work in the past (existing work area), or may be an area that will be subjected to work the first time (new work area). A column 221 represents an identifier uniquely allocated for each work area. A column 222 represents information regarding a gradient in the work area. Information regarding a gradient refers to the ratio of a portion of the work area in which the gradient is steep and a ride-on lawn mower cannot perform work, for example. In the example in FIG. 2B, an area ID in the column 221 is expressed in three stages, namely "large" (i.e., the ratio of a portion in which a ride-on lawn mower cannot perform work is large), "intermediate" (the ratio of such a portion is intermediate), and "small" (the ratio of such a portion is small). The way of expressing information regarding a gradient is not limited thereto. For example, a configuration may be adopted in which an inclination angle at which it is difficult for a ride-on lawn mower to travel is determined in advance, the inclination angle is set as a threshold, and information regarding a gradient is calculated based on the ratio of a work area that has an inclination angle that is larger than or equal to the threshold.

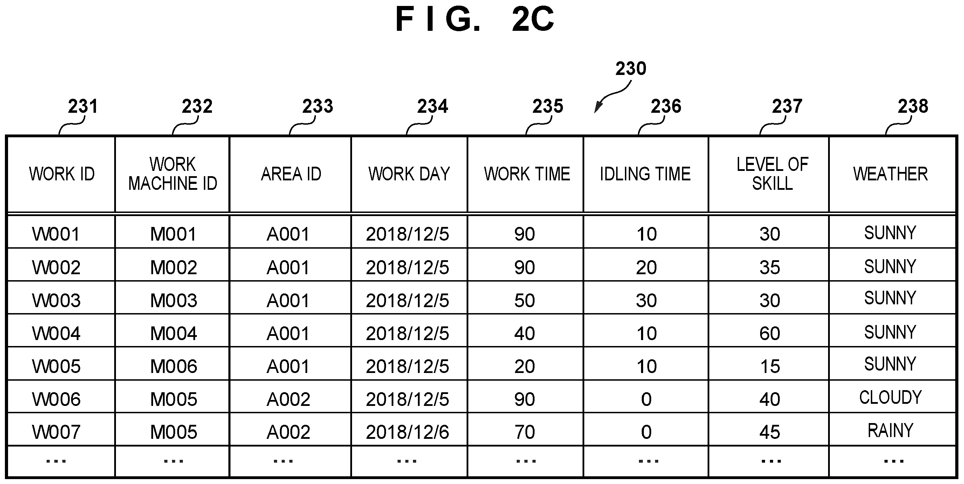

A column 223 represents information regarding an obstacle in each work area. The "information regarding an obstacle" refers to the ratio of a portion of the work area in which a ride-on lawn mower cannot perform work due to an obstacle such as a tree and a rock. In the example in FIG. 2C, a work ID in a column 231 is expressed in three stages, namely "large" (i.e., the ratio of a portion in which a ride-on lawn mower cannot perform work is large), "intermediate" (the ratio of such a portion is intermediate), and "small" (the ratio of such a portion is small). For example, a configuration may be adopted in which the width of a work area that is formed due to an obstacle and in which it is difficult for a ride-on lawn mower to travel is determined in advance, the width is set as a threshold, and information regarding an obstacle is calculated based on the ratio of a work area having a width that is smaller than or equal to the threshold. The way of expressing information regarding an obstacle is not limited thereto. A column 224 represents the area dimension of each work area (any suitable unit).

In this manner, the columns 222 to 224 represent terrain information of each work area. The work area information 220 may include other information such as the address of the work area. The user of the information processing apparatus 100 (for example, a landscaping vendor) performs research on information regarding the work area, and registers the research result in the work area information 220. The user of the information processing apparatus 100 may also update the work area information 220 based on information obtained through work performed using a work machine.

The work history information 230 is information regarding work performed by one landscaping vendor in the past. The column 231 represents an identifier uniquely allocated for each work performed in one work area in one day using one work machine. Work for which at least one of work day, work machine, and work area is different is handled as separate work. A column 232 represents an identifier of a work machine used for each work. The identifier in the column 232 has the same numbering system as an identifier in the column 211 of the work machine information 210. A column 233 represents an identifier of a work area in which each work has been performed. The identifier in the column 233 has the same numbering system as an identifier of the column 221 of the work area information 220.

A column 234 represents a date when each work was performed. A column 235 represents a work time, for example, a period of time from when the worker reaches the work area until when the worker leaves the work area. A column 236 represents an idling time during the work, in other words, a time during which a work unit is stopped while the driving source of the work machine is being driven, for example, a waiting time during work, such as a time during which the work machine is waiting for work of another type of work machine. In order to measure an idling time, the work machine may include a detection unit that detects a drive time of the driving source and a drive time of the work unit. A column 237 represents the level of skill of a person in charge of each work that has carried out the work (a score calculated based on the length of service, the number of times the person performed work, and the like). A column 238 represents the weather when each work was performed. Every time work ends, the user of the information processing apparatus 100 (for example, a landscaping vendor) registers information regarding the work in the work history information 230.

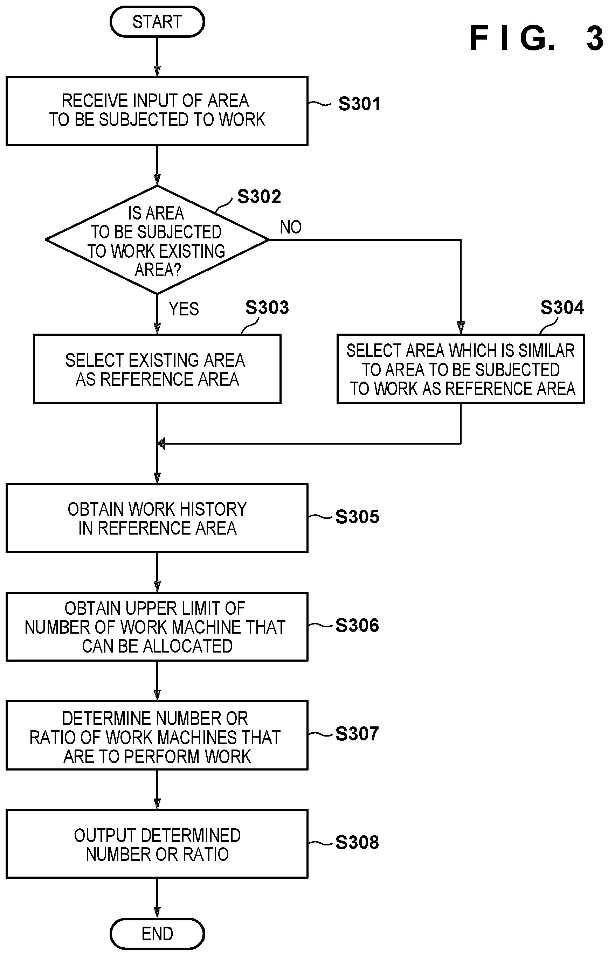

An operation example of the information processing apparatus 100 will be described with reference to FIG. 3. Steps of a method to be described below are performed as a result of the processor 101 of the information processing apparatus 100 executing a computer program stored the memory 102. Alternatively, some or all of the steps of the method to be described later may be executed by a dedicated circuit such as an ASIC (application specific integrated circuit).

In step S301, the information processing apparatus 100 receives input of an area to be subjected to work, from the user. The information processing apparatus 100 may obtain input using the input unit 103, or may obtain input from another apparatus through the communication unit 105. If the area to be subjected to work is an existing work area registered in the work area information 220, the information processing apparatus 100 may obtain, as input, the identifier of the work area in the column 221. If the area to be subjected to work is not an existing work area registered in the work area information 220 (if the area to be subjected to work is a new work area), the information processing apparatus 100 may also obtain, as input, terrain information of the area to be subjected to work (i.e., information regarding a gradient, information regarding an obstacle, and the area dimension).

In step S302, the information processing apparatus 100 determines whether or not the area to be subjected to work is an existing work area registered in the work area information 220. If the area to be subjected to work is an existing work area (YES in step S302), the information processing apparatus 100 advances the procedure to step S303, otherwise (new work area) (NO in step S302) the information processing apparatus 100 advances the procedure to step S304.

In step S303, the information processing apparatus 100 selects the area to be subjected to work as a reference area. The "reference area" refers to a work area that is referenced in order to determine the number or ratio of work machines that are to perform work in the area to be subjected to work. The same applies to step S304 to be described later.

In step S304, the information processing apparatus 100 selects, as a reference area, a work area that has terrain information similar to the terrain information of the area to be subjected to work, from existing work areas registered in the work area information 220. For example, the information processing apparatus 100 selects, as a reference area, a work area for which the information regarding a gradient and information regarding an obstacle match those of the area to be subjected to work, and the difference in area dimension from the area to be subjected to work is smallest. For example, assume that, regarding the terrain information of the area to be subjected to work, information regarding a gradient is "large", information regarding an obstacle is "small", and the area dimension is "110". In this case, a work area for which the identifier in the work area information 220 is "A001" is selected as a reference area. When there is no existing work area for which both information regarding a gradient and information regarding an obstacle match, a work area with as close conditions as possible is selected. In addition, if there are a plurality of work areas that satisfy the conditions, the information processing apparatus 100 may select any one work area, or may perform subsequent processing for each of such areas, and average the results. When, in step S304, a work area whose terrain information similar to the terrain information of the area to be subjected to work is selected as a reference area, the selection may be made in consideration of information regarding the level of skill of the person in charge of work and the weather in the area to be subjected to work. The level of skill of the worker and the weather in the area to be subjected to work significantly relate to the work efficiency, and thus it is possible to perform more optimum team formation.

In step S305, the information processing apparatus 100 obtains the work history of work performed in the reference area by work machines. Specifically, the information processing apparatus 100 reads out, from the work history information 230, work machine IDs, work day, work times, and idling times regarding the work performed in the reference area by work machines.

In step S306, the information processing apparatus 100 obtains the upper limit of the number of work machines that can be allocated for the area to be subjected to work (for example, the total number of machines owned by a vendor). The information processing apparatus 100 may read out the upper limit of the number of machines set in advance and stored in the storage unit 106, or may also receive the upper limit of the number of machines from a worker via the input unit 103 when step S306 is executed.

In step S307, the information processing apparatus 100 determines the number or ratio of work machines that are to perform work in the area to be subjected to work, based on the work history. This processing will be described later in detail.

In step S308, the information processing apparatus 100 outputs the determined number or ratio of machines. The information processing apparatus 100 may output the result using the output unit 104, or may also transmit the result to another apparatus through the communication unit 105.

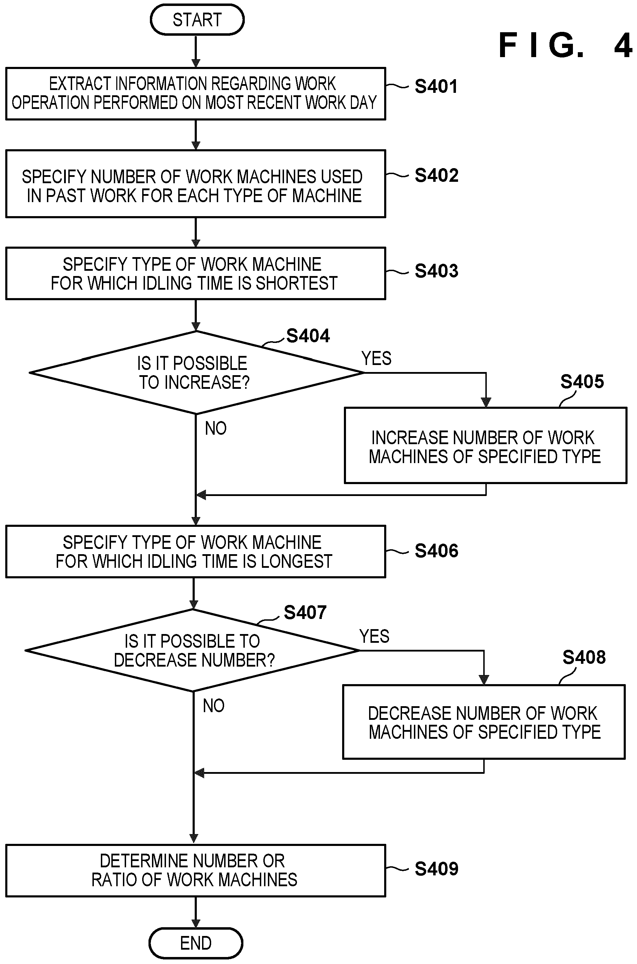

Step S307 in FIG. 3 will be described in detail with reference to FIG. 4. In step S401, the information processing apparatus 100 extracts, from the work history information 230, information regarding a work operation performed on the most recent work day from among work operations performed in the reference area. The most recent work day is extracted, since it is conceivable that the team configuration for the work operation on the most recent work day reflects the latest information.

In step S402, the information processing apparatus 100 specifies, for each type of machine, the number of work machines used in the reference area on the most recent work day, based on the extracted work history. In work performed on December 5, 2018 in a work area whose area ID is "A001", two ride-on lawn mowers, two walk-behind lawn mowers, and one blower were used, for example.

In step S403, the information processing apparatus 100 specifies the type of work machine for which the idling time is shortest, from among the work machines used in the reference area on the most recent work day. Regarding the type of work machine for which the idling time is short, there is the possibility that the number of such work machines is not sufficient. Therefore, the information processing apparatus 100 considers increasing the number of such work machines.

In step S404, the information processing apparatus 100 determines whether or not it is possible to increase the number of work machines of the type specified in step S403. If it is possible to increase the number of such work machines (YES in step S404), the information processing apparatus 100 advances the procedure to step S405, otherwise (NO in step S404) advances the procedure to step S406. For example, if the number of work machines specified in step S402 (the number of work machines used in past work) is the upper limit of the number of work machines (for example, the total number of machines owned by a vendor) that can be allocated for the area to be subjected to work, the information processing apparatus 100 determines that it is not possible to increase the number of work machines of the type specified in step S403. In step S405, the information processing apparatus 100 decreases the number of work machines of the type specified in step S403 by one.

In step S406, the information processing apparatus 100 specifies the type of work machine for which the idling time is longest, from among work machines used in the reference area on the most recent work day. There is the possibility that, regarding the type of work machine for which the idling time is long, the number of such machines is more than sufficient. Therefore, the information processing apparatus 100 considers decreasing the number of such work machines.

In step S407, the information processing apparatus 100 determines whether or not it is possible to decrease the number of work machines of the type specified in step S406. If it is possible to decrease the number of such work machines (YES in step S407), the information processing apparatus 100 advances the procedure to step S408, otherwise (NO in step S407) ends the procedure. For example, if the number of work machines specified in step S402 (the number of machines used in past work) is the lower limit of the number of machines (for example, one) that can be allocated for the area to be subjected to work, the information processing apparatus 100 determines that it is not possible to decrease the number of work machines of the type specified in step S406. In step S408, the information processing apparatus 100 decreases the number of work machines of the type specified in step S406 by one.

In step S409, the information processing apparatus 100 determines the result of increasing or decreasing, in step S405 or S408, the number of work machines specified in step S402, as the number of work machines that are to perform work in the area to be subjected to work. The information processing apparatus 100 may also determine the ratio of work machines that are to perform work in the area to be subjected to work, in addition to or in place of determining the number of work machines. Using this ratio, the user of the information processing apparatus 100 can determine an appropriate number of work machines, regarding an area to be subjected to work, for which information regarding a gradient and information regarding an obstacle match but the area dimension is different.

The area to be subjected to work that is input in step S301 in FIG. 3 may be a single area, or may be divided into a plurality of areas. If the area is divided into a plurality of areas, the information processing apparatus 100 performs the processing in FIG. 3 on each of the divided areas. In this case, the information processing apparatus 100 may determine the number or ratio of work machines, based on the work area dimensions of the plurality of areas. For example, the information processing apparatus 100 may determine the number of work machines such that the number of work machines that are used in each area is proportional to the area dimension ratio.

According to above-described embodiment, it is possible to shorten the idling times of a plurality of types of work machines, and perform team formation for realizing the optimum work efficiency.

### Embodiment Overview

1. An information processing apparatus (100) characterized by comprising:
   obtaining means for obtaining a work history (230) of work performed by a plurality of types of work machines (S305);
   determination means for determining a number or ratio of work machines that are to perform work in an area to be subjected to work, based on the work history (S307).
   According to this configuration, it is possible to calculate the optimum number or ratio of work machines based on the work history, for example, and perform team formation for realizing the optimum work efficiency.
2. The information processing apparatus according to 1, characterized in that
   determining the number or ratio of work machines that are to perform work in the area to be subjected to work includes determining the number or ratio based on a work history of work performed by a work machine in a work area that has terrain information similar to terrain information (222 to 224) of the area to be subjected to work (S304).
   According to this configuration, it is possible to efficiently perform optimum team formation even for a new area to be subjected to work, by performing a determination based on a work history of an area that has similar terrain information.
3. The information processing apparatus according to 1 or 2, characterized in that
   the work history includes an idling time (236) while work is performed by the plurality of types of work machines.
   According to this configuration, it is possible to efficiently perform optimum team formation by performing a determination based on an idling time.
4. The information processing apparatus according to any one of 1 to 3, characterized in that
   the plurality of types of work machines include a ride-on lawn mower and a walk-behind lawn mower, and
   terrain information of the area to be subjected to work includes information regarding a gradient (222) and information regarding an obstacle (223).
   According to this configuration, it is possible to more accurately specify an area in which a ride-on lawn mower does not perform work, and perform team formation for realizing the optimum the work efficiency.
5. The information processing apparatus according to any one of 1 to 4, characterized in that
   the work history includes at least one of a level of skill of a person in charge of work (237) and a weather in a work location (238).
   According to this configuration, the level of skill of the worker and the weather in the area to be subjected to work significantly relate to the work efficiency, and thus it is possible to perform more optimum team formation.
6. The information processing apparatus according to any one of 1 to 5, characterized in that
   determining the number or ratio of work machines that are to perform work in the area to be subjected to work includes determining the number or ratio such that an upper limit of the number of work machines that can be allocated for the area to be subjected to work is not exceeded (S404).
   According to this configuration, it is possible to perform team formation for realizing the optimum work efficiency while satisfying the condition of the number of work machines that can be allocated.
7. The information processing apparatus according to any one of 1 to 6, characterized in that
   the area to be subjected to work is divided into a plurality of areas, and
   determining the number or ratio includes determining the number or ratio of work machines that are to perform work in each of the plurality of areas, based on a work area dimension of the area.
   According to this configuration, even if the area to be subjected to work is divided into a plurality of areas, it is possible to efficiently perform optimum team formation.
8. An information processing method characterized by comprising:
   obtaining a work history (230) of work performed by a plurality of types of work machines (S305); and
   determining a number or ratio of work machines that are to perform work in an area to be subjected to work, based on the work history (S307).
   According to this configuration, it is possible to calculate the optimum number or ratio of work machines based on the work history, for example, and perform team formation for realizing the optimum work efficiency.
9. A computer program for causing a computer to function as each means of the information processing apparatus according to any one of 1 to 7.
   According to this configuration, it is possible to provide the assistance apparatus in the form of a program.

To apprise the public of the scope of the present invention, the following claims are made.

### REFERENCE SIGNS LIST

- 100: Information processing apparatus
- 210: Work machine information
- 220: Work area information
- 230: Work history information

## Claims

1. An information processing apparatus comprising:
obtaining means for obtaining a work history of work performed by a plurality of types of work machines; and
**characterized in**
**that** the information processing apparatus comprises
specifying means for specifying a type of work machine for which an idling time is shortest from among work machines used in a reference work area that has terrain information (220) similar to terrain information (220) of an area to be subjected to work, the terrain information (220) including information regarding a gradient of the area; and
determination means for determining a number or ratio of work machines that are to perform work in the area to be subjected to work, based on the specified type of the work machine and a work history of work performed by a work machine in the reference work area,
wherein the information regarding a gradient of the area includes a portion of the area in which an inclination angle is larger than or equal to a threshold and the threshold is set based on the inclination angle for which a ride-on lawn mower cannot perform work, and
**that** the information processing apparatus comprises at least one of
an output unit (104) configured to output the determined number or ratio of work machines to a user, and
a communication unit (105) configured to transmit the determined number or ratio of work machines to another apparatus.

2. The information processing apparatus according to claim 1, **characterized in that**
the work history includes an idling time while work is performed by the plurality of types of work machines.

3. The information processing apparatus according to any one of claims 1 or 2, **characterized in that**
the plurality of types of work machines include the ride-on lawn mower and a walk-behind lawn mower, and
the terrain information (220) of the area to be subjected to work includes the information regarding a gradient and information regarding an obstacle.

4. The information processing apparatus according to any one of claims 1 to 3, **characterized in that**
the work history includes at least one of a level of skill of a person in charge of work and a weather in a work location.

5. The information processing apparatus according to any one of claims 1 to 4, **characterized in that**
determining the number or ratio of work machines that are to perform work in the area to be subjected to work includes determining the number or ratio such that an upper limit of the number of work machines that can be allocated for the area to be subjected to work is not exceeded.

6. The information processing apparatus according to any one of claims 1 to 5, **characterized in that**
the area to be subjected to work is divided into a plurality of areas, and
determining the number or ratio includes determining the number or ratio of work machines that are to perform work in each of the plurality of areas, based on a work area dimension of the area.

7. An information processing method performed by a computer, comprising:
obtaining a work history of work performed by a plurality of types of work machines; and
**characterized in**
**that** the information processing method comprises
specifying a type of work machine for which an idling time is shortest from among work machines used in a reference work area that has terrain information (220) similar to terrain information (220) of an area to be subjected to work, the terrain information (220) including information regarding a gradient of the area; and
determining (S307) a number or ratio of work machines that are to perform work in the area to be subjected to work, based on the specified type of the work machine and a work history of work performed by a work machine in the reference work area,
wherein the information regarding a gradient of the area includes a portion of the area in which an inclination angle is larger than or equal to a threshold and the threshold is set based on the inclination angle for which a ride-on lawn mower cannot perform work, and
**that** the information processing method comprises at least one of
outputting (S308), by an output unit (104), the determined number or ratio of work machines to a user, and
transmitting (S308), by a communication unit (105), the determined number or ratio of work machines to another apparatus.

8. A computer program for causing a computer to function as each means of the information processing apparatus according to any one of claims 1 to 6.

## Patentansprüche

1. Eine Informationsverarbeitungsvorrichtung, aufweisend:
eine Erfassungseinrichtung zum Erfassen eines Arbeitsverlaufs der von einer Mehrzahl an Arbeitsmaschinentypen ausgeführten Arbeit;
**dadurch gekennzeichnet**
**dass** die Informationsverarbeitungsvorrichtung umfasst:
eine Spezifizierungseinrichtung zum Spezifizieren eines Arbeitsmaschinentyps, für den, unter den in einem Referenzarbeitsbereich verwendeten Arbeitsmaschinen, eine Leerlaufzeit am kürzesten ist, wobei der Referenzarbeitsbereich eine Geländeinformation (220) aufweist, die der Geländeinformation (220) eines zu bearbeitenden Bereichs ähnlich ist, wobei die Geländeinformation (220) Information hinsichtlich einer Neigung des Bereichs enthält; und
eine Bestimmungseinrichtung zum Bestimmen einer Anzahl oder eines Verhältnisses von Arbeitsmaschinen, welche Arbeiten in dem zu bearbeitenden Bereich durchführen sollen, auf der Grundlage des spezifizierten Typs der Arbeitsmaschine sowie einer Arbeitshistorie von Arbeiten, die von einer Arbeitsmaschine in dem Referenzarbeitsbereich durchgeführt wurden,
wobei die Information hinsichtlich einer Neigung des Bereichs einen Teil des Bereichs miteinschließt, in dem ein Neigungswinkel größer oder gleich einem Schwellenwert ist, wobei der Schwellenwert auf der Grundlage des Neigungswinkels festgelegt wird, bei dem ein Aufsitzrasenmäher keine Arbeit verrichten kann, und
wobei die Informationsverarbeitungsvorrichtung zumindest eines der folgenden Elemente umfasst:
eine Ausgabeeinheit (104), ausgebildet, um die bestimmte Anzahl oder das bestimmte Verhältnis von Arbeitsmaschinen an einen Benutzer auszugeben, und
eine Kommunikationseinheit (105), ausgebildet, um die bestimmte Anzahl oder das bestimmte Verhältnis von Arbeitsmaschinen an eine andere Vorrichtung zu übertragen.

2. Die Informationsverarbeitungsvorrichtung nach Anspruch 1, **dadurch gekennzeichnet, dass**
die Arbeitshistorie eine Leerlaufzeit enthält, während Arbeit von der Mehrzahl an Arbeitsmaschinentypen ausgeführt wird.

3. Die Informationsverarbeitungsvorrichtung nach einem der Ansprüche 1 oder 2, **dadurch gekennzeichnet, dass**
die Mehrzahl an Arbeitsmaschinentypen den Aufsitzrasenmäher sowie einen handgeführten Rasenmäher umfassen, und
die Geländeinformation (220) des zu bearbeitenden Bereichs die Information über eine Neigung sowie Information über ein Hindernis enthält.

4. Die Informationsverarbeitungsvorrichtung nach einem der Ansprüche 1 bis 3, **dadurch gekennzeichnet, dass**
die Arbeitshistorie das Qualifikationsniveau einer für die Arbeit verantwortlichen Person und/oder das Wetter am Arbeitsort beinhaltet.

5. Die Informationsverarbeitungsvorrichtung nach einem der Ansprüche 1 bis 4, **dadurch gekennzeichnet, dass**
das Bestimmen der Anzahl oder des Verhältnisses von in dem zu bearbeitenden Bereich Arbeiten auszuführenden Arbeitsmaschinen derart erfolgt, dass eine Obergrenze der Anzahl von Arbeitsmaschinen, die für den zu bearbeitenden Bereich zugewiesen werden können, nicht überschritten wird.

6. Die Informationsverarbeitungsvorrichtung nach einem der Ansprüche 1 bis 5, **dadurch gekennzeichnet, dass**
der zu bearbeitende Bereich in eine Mehrzahl an Bereichen unterteilt ist, und
das Bestimmen der Anzahl oder des Verhältnisses das Bestimmen der Anzahl oder des Verhältnisses von in jedem der Mehrzahl an Bereichen Arbeiten durchzuführenden Arbeitsmaschinen umfasst, auf Grundlage einer Arbeitsbereichsabmessung des Bereichs.

7. Ein Informationsverarbeitungsverfahren, das von einem Computer durchgeführt wird, aufweisend:
das Erhalten einer Arbeitshistorie von Arbeit, welche von einer Mehrzahl an Arbeitsmaschinentypen ausgeführt wurde;
**dadurch gekennzeichnet**
**dass** das Informationsverarbeitungsverfahren die folgenden Schritte aufweist:
Spezifizieren eines Arbeitsmaschinentyps, für den, unter den in einem Referenzarbeitsbereich verwendeten Arbeitsmaschinen, eine Leerlaufzeit am kürzesten ist, wobei der Referenzarbeitsbereich eine Geländeinformation (220) aufweist, die der Geländeinformation (220) eines zu bearbeitenden Bereichs ähnlich ist, wobei die Geländeinformation (220) Information hinsichtlich einer Neigung des Bereichs enthält; und
Bestimmen (S307) einer Anzahl oder eines Verhältnisses von Arbeitsmaschinen, welche Arbeiten in dem zu bearbeitenden Bereich durchführen sollen, auf der Grundlage des spezifizierten Typs der Arbeitsmaschine sowie einer Arbeitshistorie von Arbeiten, die von einer Arbeitsmaschine in dem Referenzarbeitsbereich durchgeführt wurden,
wobei die Information hinsichtlich einer Neigung des Bereichs einen Teil des Bereichs miteinschließt, in dem ein Neigungswinkel größer oder gleich einem Schwellenwert ist, wobei der Schwellenwert auf der Grundlage des Neigungswinkels festgelegt wird, bei dem ein Aufsitzrasenmäher keine Arbeit verrichten kann, und
wobei das Informationsverarbeitungsverfahren zumindest eines der folgenden Schritte aufweist:
Ausgeben (S308) der bestimmten Anzahl oder des Verhältnisses von Arbeitsmaschinen an einen Benutzer über eine Ausgabeeinheit (104), und
Übertragen (S308) der bestimmten Anzahl oder des Verhältnisses von Arbeitsmaschinen an eine andere Vorrichtung über eine Kommunikationseinheit (105).

8. Ein Computerprogramm, welches einen Computer veranlasst, als jede Einrichtung der Informationsverarbeitungsvorrichtung nach einem der Ansprüche 1 bis 6 zu arbeiten.

## Revendications

1. Appareil de traitement d'informations comprenant :
des moyens d'obtention pour obtenir un historique de travaux de travaux réalisés par une pluralité de types de machines de travail ; et
**caractérisé en ce que**
l'appareil de traitement d'informations comprend
des moyens de spécification pour spécifier un type de machine de travail pour laquelle un temps de fonctionnement au ralenti est le plus court parmi des machines de travail utilisées dans une zone de travail de référence présentant des informations de terrain (220) similaires à des informations de terrain (220) d'une zone devant être soumise à un travail, les informations de terrain (220) comportant des informations relatives à un gradient de la zone ; et
des moyens de détermination pour déterminer un nombre ou un rapport de machines de travail qui doivent réaliser un travail dans la zone devant être soumise à un travail, sur la base du type spécifié de la machine de travail et d'un historique de travaux de travaux réalisés par une machine de travail dans la zone de travail de référence,
dans lequel les informations relatives à un gradient de la zone comportent une partie de la zone dans laquelle un angle d'inclinaison est supérieur ou égal à un seuil et le seuil est défini sur la base de l'angle d'inclinaison pour lequel une tondeuse à gazon autoportée ne peut pas réaliser un travail, et
l'appareil de traitement d'informations comprend au moins l'une parmi
une unité de sortie (104) configurée pour délivrer le nombre ou le rapport déterminé de machines de travail à un utilisateur, et
une unité de communication (105) configurée pour transmettre le nombre ou le rapport déterminé de machines de travail à un autre appareil.

2. Appareil de traitement d'informations selon la revendication 1, **caractérisé en ce que** l'historique de travaux comporte un temps de fonctionnement au ralenti pendant qu'un travail est réalisé par la pluralité de types de machines de travail.

3. Appareil de traitement d'informations selon la revendication 1 ou 2, **caractérisé en ce que**
la pluralité de types de machines de travail comporte la tondeuse à gazon autoportée et une tondeuse à gazon poussée, et
les informations de terrain (220) de la zone devant être soumise à un travail comportent les informations relatives à un gradient et des informations relatives à un obstacle.

4. Appareil de traitement d'informations selon l'une quelconque des revendications 1 à 3, **caractérisé en ce que**
l'historique de travaux comporte au moins l'un d'un niveau de compétence d'une personne chargée d'un travail et de conditions météorologiques à un emplacement de travail.

5. Appareil de traitement d'informations selon l'une quelconque des revendications 1 à 4, **caractérisé en ce que**
la détermination du nombre ou du rapport de machines de travail qui doivent réaliser un travail dans la zone devant être soumise à un travail comporte la détermination du nombre ou du rapport de sorte qu'une limite supérieure du nombre de machines de travail pouvant être affectées à la zone devant être soumise à un travail ne soit pas dépassée.

6. Appareil de traitement d'informations selon l'une quelconque des revendications 1 à 5, **caractérisé en ce que**
la zone devant être soumise à un travail est divisée en une pluralité de zones, et
la détermination du nombre ou du rapport comporte la détermination du nombre ou du rapport de machines de travail qui doivent réaliser un travail dans chacune de la pluralité de zones, sur la base d'une dimension de zone de travail de la zone.

7. Procédé de traitement d'informations réalisé par un ordinateur, comprenant :
l'obtention d'un historique de travaux de travaux réalisés par une pluralité de types de machines de travail ; et
**caractérisé en ce que**
le procédé de traitement d'informations comprend
la spécification d'un type de machine de travail pour laquelle un temps de fonctionnement au ralenti est le plus court parmi des machines de travail utilisées dans une zone de travail de référence présentant des informations de terrain (220) similaires à des informations de terrain (220) d'une zone devant être soumise à un travail, les informations de terrain (220) comportant des informations relatives à un gradient de la zone ; et
la détermination (S307) d'un nombre ou d'un rapport de machines de travail qui doivent réaliser un travail dans la zone devant être soumise à un travail, sur la base du type spécifié de la machine de travail et d'un historique de travaux de travaux réalisés par une machine de travail dans la zone de travail de référence,
dans lequel les informations relatives à un gradient de la zone comportent une partie de la zone dans laquelle un angle d'inclinaison est supérieur ou égal à un seuil et le seuil est défini sur la base de l'angle d'inclinaison pour lequel une tondeuse à gazon autoportée ne peut pas réaliser un travail, et
le procédé de traitement d'informations comprend au moins l'une parmi la délivrance (S308), par une unité de sortie (104), du nombre ou du rapport déterminé de machines de travail à un utilisateur, et
la transmission (S308), par une unité de communication (105), du nombre ou du rapport déterminé de machines de travail à un autre appareil.

8. Programme informatique pour amener un ordinateur à fonctionner en tant que chacun des moyens de l'appareil de traitement d'informations selon l'une quelconque des revendications 1 à 6.
